# NEW EUROPEAN PATENT SPECIFICATION

(11) **EP 2 396 267 B2**
(45) Date of publication and mention of the opposition decision: **16.01.2019**
(45) Mention of the grant of the patent: 19.12.2012
(21) Application number: 09804071.0
(22) Date of filing: 27.11.2009
(51) Int. Cl.: B66D 1/30, B66D 1/34, B66D 1/48, A47C 17/84, A61G 7/012, G05D 3/20

(54) **DEVICE FOR LIFTING BED STRUCTURES**
VORRICHTUNG ZUM ANHEBEN VON BETTSTRUKTUREN
DISPOSITIF DE LEVAGE DE STRUCTURES DE LIT

(30) Priority: 14.02.2009 IT FI20090030; 11.05.2009 IT FI20090100
(43) Date of publication of application: 21.12.2011
(73) Proprietor: Nardini, Davide, 50019 Sesto Fiorentino (Firenze) (IT)
(72) Inventor: Nardini, Davide, 50019 Sesto Fiorentino (Firenze) (IT)
(74) Representative: Mincone, Antimo
(86) International application number: PCT/IT2009/000534
(87) International publication number: WO 2010/092607

(56) References cited:
- DE-U1- 9 114 598
- DE-U1- 9 114 598
- JP-U- 6 025 290
- JP-U- H0 625 290
- US-A- 5 984 404
- US-A- 5 984 404
- US-A1- 2007 226 901
- US-A1- 2007 226 901
- US-B2- 6 983 979
- US-B2- 7 347 484

## Description

The present invention relates to a lifting device for bed structures, particularly for compartments or cabins of vehicles such as campervans, motorhomes, caravans, boats and so on.

It is known that in the above vehicles it is necessary to dispose a bed in the lowered operating position and in the lifted recovery position so as to occupy the cabin space destined to the bed only if necessary.

US 2007/226901 A1 discloses a lifting device for bed structures comprising a shaft operated by at least one speed reducer, wherein the said shaft operates two pairs of belts. This document discloses further that by operating the at least one speed reducer, that is to say by rotating the shaft in the clockwise and counter-clockwise direction about its longitudinal axis, the belts are wound or unwound with the consequent lifting or lowering of strap rollers attached to a bed frame, i.e. lifting or lowering of the bed net, and that at the ends of said shaft there are provided two coaxial pulleys onto each of them it is wound a corresponding belt featuring one end anchored on the surface of the corresponding pulley and the other end joined to a corresponding fixed point or anchorage i.e. fixed to a point positioned at a predetermined height, corresponding vertical guides being also fixed under said anchorages, such that by rotating the shaft in the clockwise and counter-clockwise direction about its longitudinal axis, the belts are wound around their corresponding pulleys or unwound from them so as to obtain the lifting and lowering of the strap rollers along the said guides.

US 5 984 404 A discloses a lifting device for bed structures comprising a shaft operated by at least one speed reducer, wherein the said shaft operates two pairs of belts and wherein at the ends of said shaft there are provided two coaxial pulleys onto each of them it is wound a corresponding belt featuring one end anchored on the surface of the corresponding pulley.

The main aim of the present invention is to propose a lifting device for bed structures, especially for the so-called recreational vehicles which allows the lifting and lowering of a bed structure in a safe and simple way, with the possibility of increasing the bed run without negatively affecting the size, the weight and the cost of the device.

These results have been achieved, in compliance with the present invention, by adopting the concept of making a device having the features described in claim 1. Further features of the invention are the subject of the dependent claims.

The present invention allows the realization of a lifting device provided with a simple structure and easy to use which is also safe, reliable and economic in relation to the advantages it offers. Moreover, the present invention allows the increase of the bed run without increasing the size, weight and cost of the device, so as to increase the height of the space available under the bed structure when said space is no used and to render the vehicle more usable.

Every technician who works in this field will better understand these advantages and further advantages and features of the present invention thanks to the following description and to the enclosed drawings, given as an exemplification of the invention but not be considered in a limitative sense, wherein:
- Figs 1 to 3 show a possible embodiment of a device according to the present invention ;
- Figs 4 to 6 show a further embodiment of a device according to the present invention;
- Figs 7 and 8 are two different views of the belt speed reducer;
- Fig. 9 shows a simplified block diagram of a programming and control system;
- Fig. 10 shows a further embodiment of the belt driving shaft;
- Fig. 11 shows a section view along line B-B of Fig. 10;
- Fig. 12 shows a perspective view of the shaft of Fig. 10;
- Fig. 13 shows an enlargement of detail "A" of Fig. 12;
- Fig. 14 shows an exploded view concerning a detail of the shaft shown in Figs 10 to 13;
- Fig. 15 shows an exemplificative application of the shaft shown in Figs 10 to 14;
- Fig. 16 and 17 show two further embodiments of the device according to the invention ;
- Figs 18A-18E, 19 and 20 show a further application of a device according to the present invention ;
- Figs 21-24 shows respectively the enlarged details "A", "B", "C" and "D" of Fig. 20.

A device according to the present invention, as said in the introduction, can be used for lifting or lowering a bed, that is, a bed net (R) forming the bed base inserted in the cabin of a recreational vehicle (not shown in the drawings).

Seen in its essential structure and with reference to the enclosed drawings, a device according to the present invention comprises a shaft (1) operated by means of a speed reducer (10), at whose hands two couples of coaxial pulleys are mounted (2,3,4,5). A belt (20, 30, 40, 50) is wound around each of said pulleys (2, 3,4,5). Each of said belts has one end anchored on the surface of a corresponding pulley and one end joined to a corresponding fixed point (21,31,41,51), that is to a point which is at a predetermined height. Said fixed points (21,31,41,51) constitute the vertexes of an ideal quadrilateral which extends transversally to the vehicle cabin and are realized as anchorages, fixed to the cabin; under said anchorages corresponding vertical guides (22, 32, 42, 52) are also fixed to the vehicle cabin.

An" L" shaped bracket (23, 33, 43, 53) is applied on each of said belts (20, 30, 40, 50) and said bracket features a wing on which the bed net (R) is positioned.

Therefore, by operating the speed reducer (10), that is, by rotating the shaft (1) in the clockwise and counter-clockwise direction about its longitudinal axis, the belts are wound around their corresponding pulleys or unwound from them so as to obtain the lifting and lowering of the brackets (23, 33, 43, 53) along the guides (22, 32, 42, 52) and, thus, the lifting and lowering of the bed net (R).

Each of said belts slides inside a loop or eyelet offered by a corresponding "L" shaped bracket. A stabilizing trolley (not shown in the drawings), destined to slide in a corresponding guide, can be applied onto at least two of said brackets.

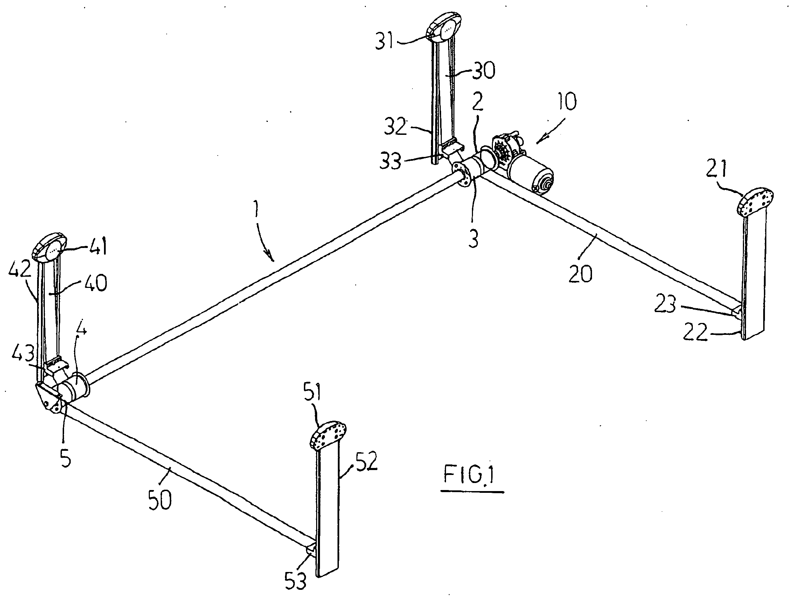

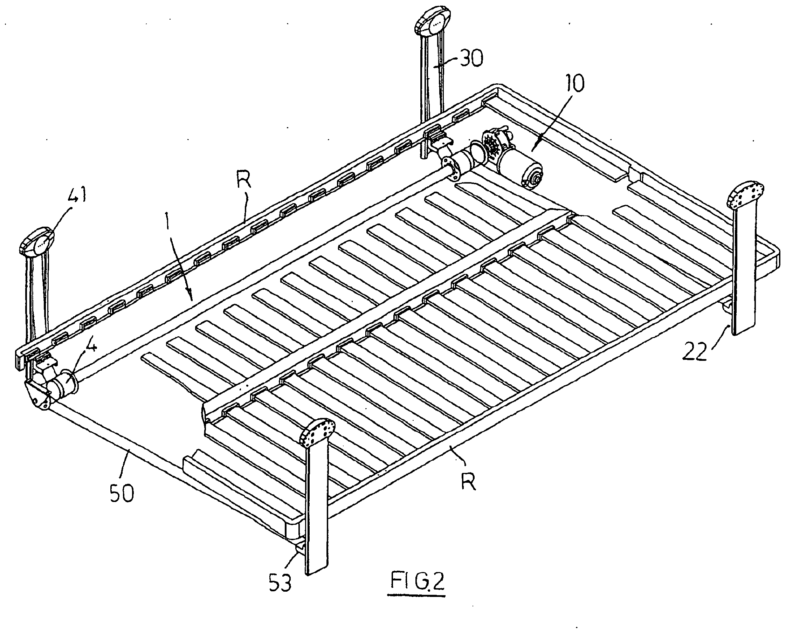

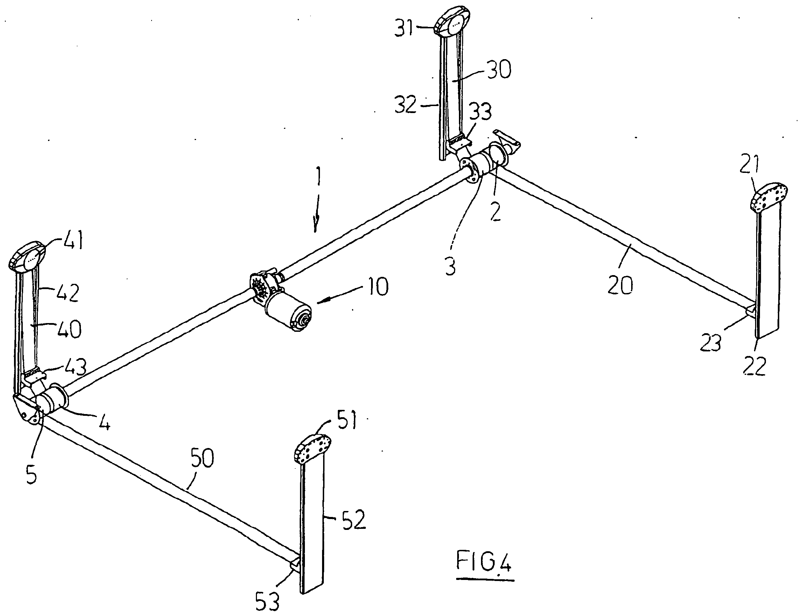

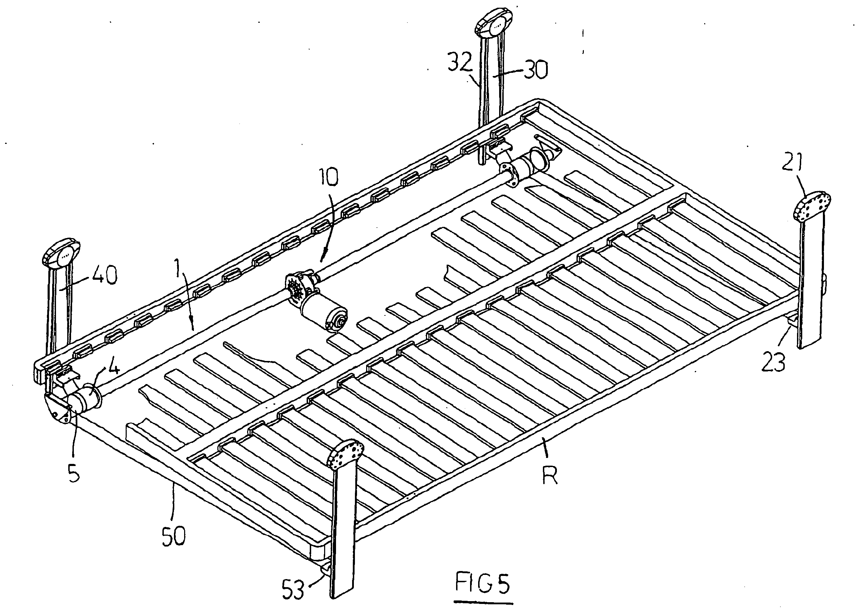

According to the embodiment shown in the figures of the enclosed drawings, an encoder (11), which senses the revolutions of the output shaft of the speed reducer (100) and communicates with a programmable central unit (12), is associated with the speed reducer unit (10). Moreover, a keyboard (13) is connected to the central unit: through said keyboard when setting or programming the system, the user controls the lifting of the bed net (R) until an electric end switch (positioned at a point corresponding to the maximum allowable height) is reached, where the system is reset, then he/she controls the descent of the bed net (R) to the desired point and stores said point which corresponds to a given number of revolutions detected by the encoder (11). The user will then control the lifting of the bed net (R), without repeating said procedure, and said bed net will reach the previously stored point. Similarly, it is possible to program or to set the maximum lowering point. Said speed reducer (10) can be provided with a single output shaft so as to be positioned parallel to a short side of the bed net (R), as shown in Figs 1 to 3, or with two output shafts so as to be positioned centrally, parallel to a long side of the bed net (R) as shown in the Figs 4 to 6.

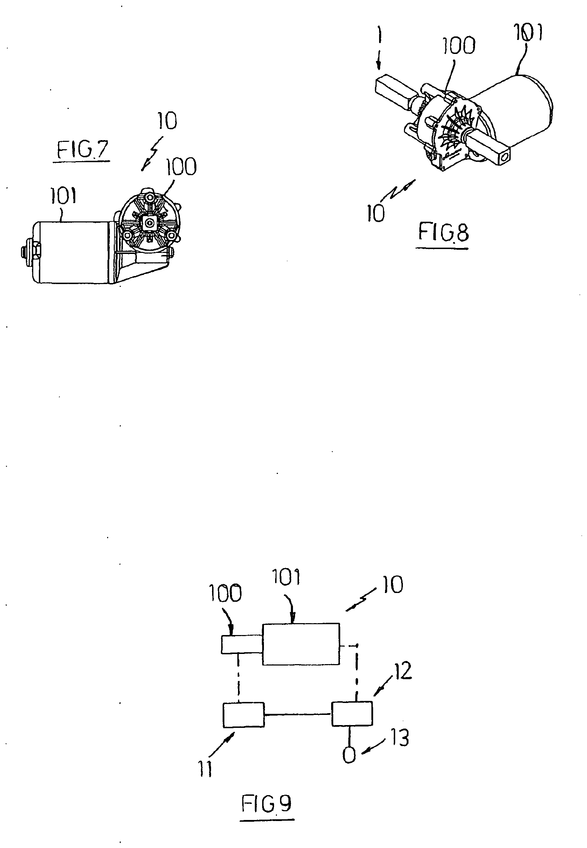

Moreover, as shown in Figs 7 and 8, said shaft can be a square-section shaft.

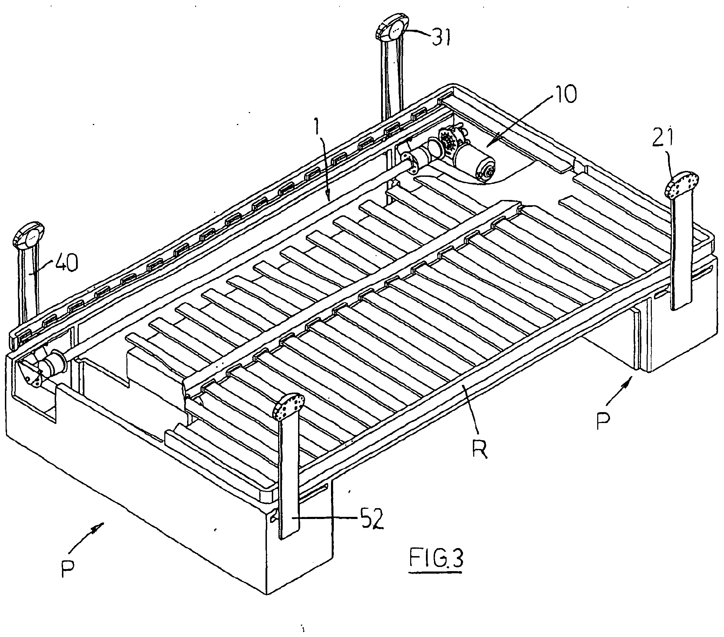

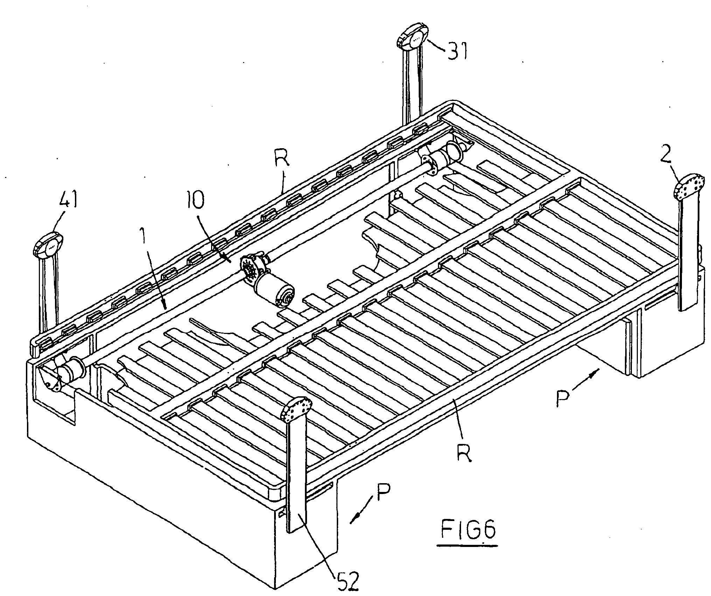

In Figs 3 and 6 of the enclosed drawings, the reference "P" indicates a cabinet fixed under the lower base of the bed net (R).

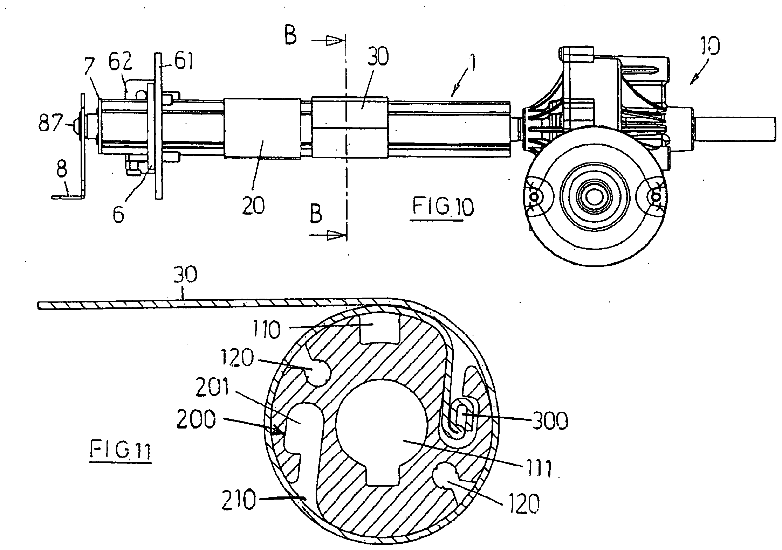

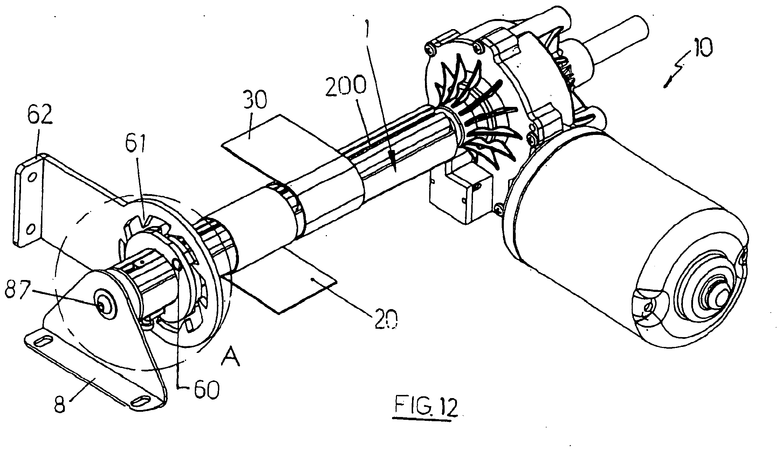

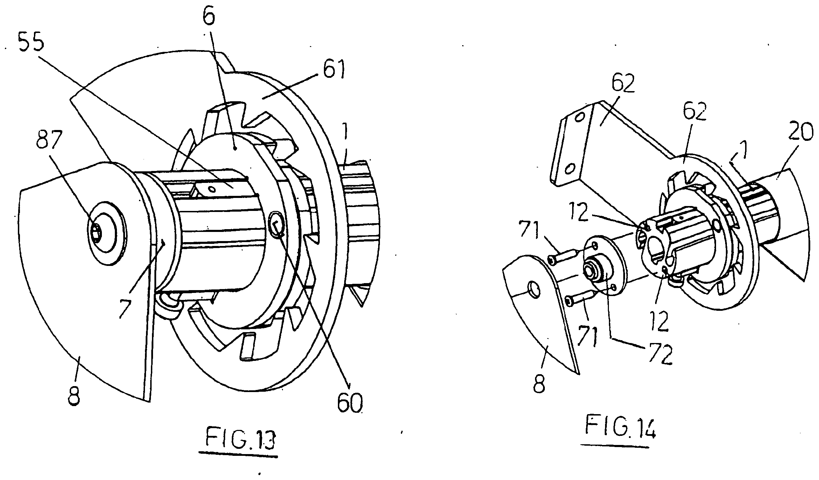

With reference to the embodiment shown in the Figs 10 to 16, the shaft (1) features a series of longitudinal grooves (200) along its surface, whose profile allows the insertion of an end (300) of a corresponding belt (20, 30, 40, 50) into each of said grooves. Said shaft (1) can be made, for example, of aluminium.

As the grooves (200) extend over the whole length of the shaft, the belts (20, 30, 40, 50) can be positioned everywhere on the shaft (1) according to the user's specific requirements. The profile of the grooves (200) allows the insertion of the ends (300) of said belts (20, 30, 40, 50) without any particular difficulties.

In particular, according to the embodiment shown in the enclosed drawings, each of said grooves (200) features a part open outwards with an opening (210) for the ends (300) of the belts (20, 30, 40, 50) and an internal part; the latter exhibits a larger cross section so as to form a seat closed on three sides which communicates with the opening (210) provided for inserting the ends (300) of the belts (20, 30, 40, 50).

The shaft (1) features a central hole (111) for its coaxial coupling with the output shaft of the speed reducer (10).

With reference to the example shown in the figs 10 to 15, the shaft (1) features also a rectilinear superficial groove into which a key (55) allowing the connection of a locking device on the same shaft can be inserted. Said locking device comprises a disc (6) which is coaxially mounted on the shaft (1) and is fixed to it by means of the key (55); inside said disc more pins are positioned and they, by centrifugal effect, come out of the disc whenever the angular speed of the shaft (1) exceeds a predetermined value. The disc (6) is coupled to a ring (61) provided with an internal toothing. The ring (61) is solid to a fixed surface (not shown in the drawings) thanks to an extension (62) which serves as an anchorage bracket. If the angular speed of the shaft (1) exceeds a predetermined value (due to the breaking of the key connecting the shaft with the speed reducer, for example, or for any other reason causing the exceeding of said value and thus a dangerous situation due to a possible and uncontrolled quick descent of a load carried by the belts 20, 30, 40, 50), the pins come out of the disc and engage the toothing of the ring (61) so as to block the shaft (1).

With reference to the embodiment shown in the enclosed drawings, the shaft (1) features a plurality of longitudinal holes (120) into which corresponding screws for fixing a plate (7) to one end of the shaft (1) can be inserted. The plate (7) features a bushing (72) on its external side in which a bolt (87) for fixing a bracket (8) is inserted. In this way, the end of the shaft (1) is adequately supported.

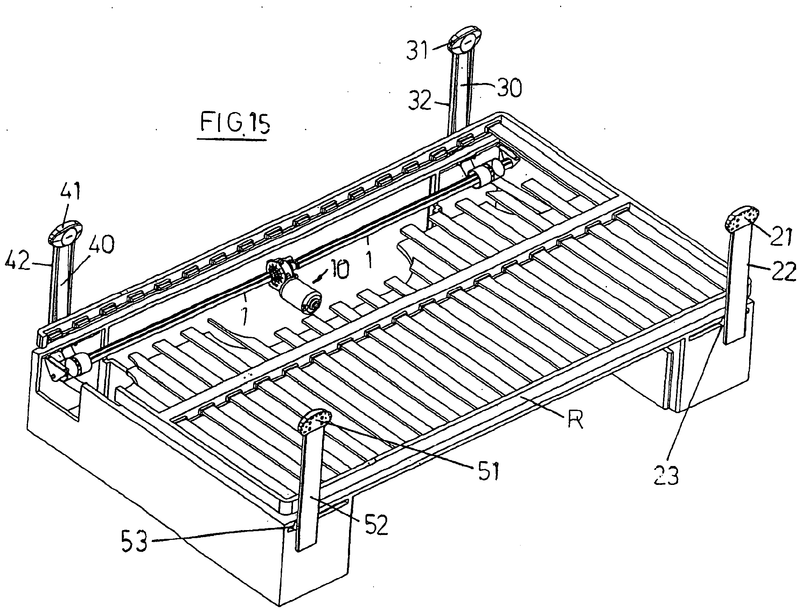

Fig. 15 shows a possible application for the shaft shown in the figures 10 to 14. In this example, the shaft (1) features two sections (one to the right and one to the left of the speed reducer 10 which has two counterposed outputs) and two pairs of belts (20, 30, 40, 50) are wound around on each of said sections. Each of said belts has one end anchored in a groove (200) of the shaft (1) and one end joined to a corresponding fixed point (21, 31, 41, 51), that is to a point which is at a predetermined height of a support wall of the bed structure.

As in the previous example, said fixed points (21, 31, 41, 51) constitute the vertexes of an ideal quadrilateral which extends transversally to the vehicle cabin and are realized as anchorages, fixed to the cabin, under which corresponding vertical guides have been mounted (22, 32, 42, 52) and said guides are fixed to the vehicle cabin as well.

As in the previous example, an "L" shaped bracket, featuring a wing on which the bed net (R) is positioned, is mounted on each of said belts (20, 30, 40, 50).

Therefore, by operating the speed reducer(10), that is, by rotating the shaft (1) in the clockwise and counter-clockwise direction about its longitudinal axis, it is possible to obtain the winding and unwinding of the belts and, thus, the lifting or lowering of the brackets (S) along the guides (22, 32, 42, 52), i.e. the lifting and lowering of the bed net (R).

As previously said, since the belts (20, 30, 40, 50) can be applied along the shaft (1) in any desired position, all the inconveniences connected with the limitations arising from the positioning of the belts at fixed points have been eliminated or at least highly reduced.

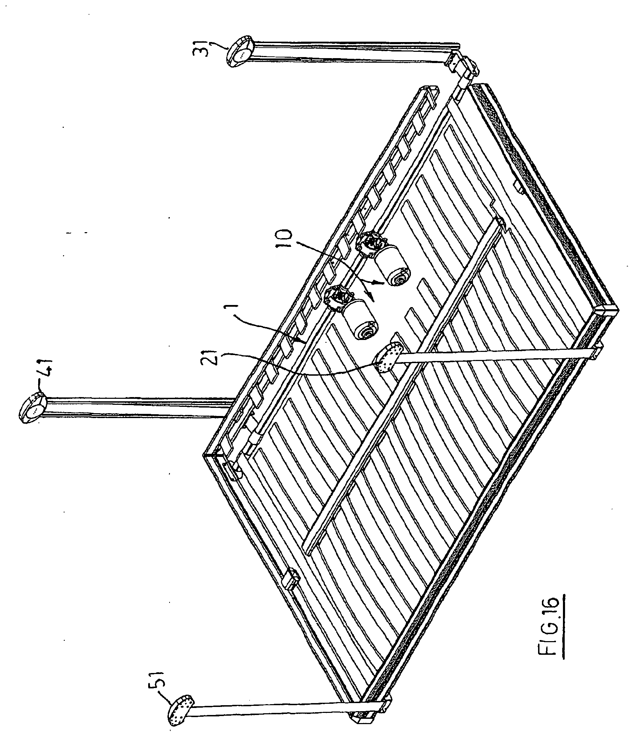

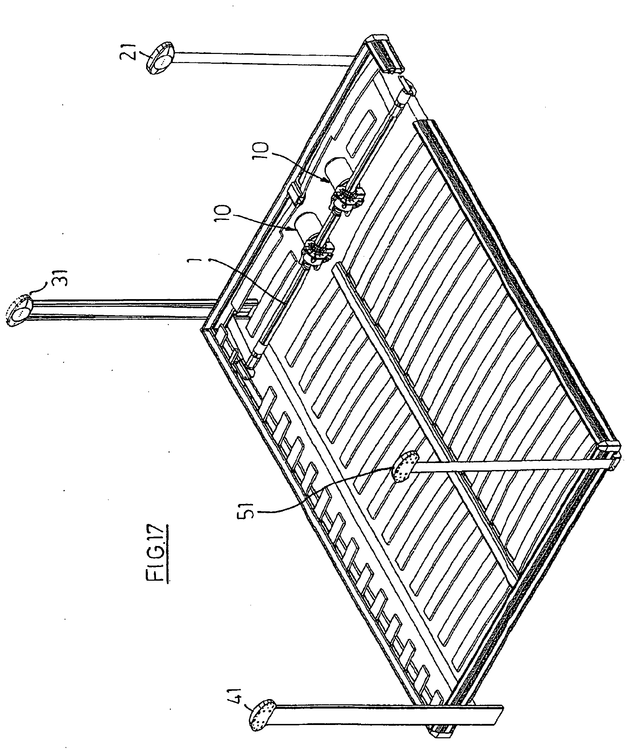

With reference to the embodiments shown in Fig. 16 and in Fig. 17, two synchronized speed reducers are mounted side-by-side instead of a single speed reducer and the shaft (1) is positioned parallel to a long side of the bed base (as shown in Fig 16) or parallel to a short side of said base (as shown in Fig. 17) depending on the position of the bed inside the vehicle.

This solution allows the lifting of heavier and larger structures ensuring the necessary stability of the system.

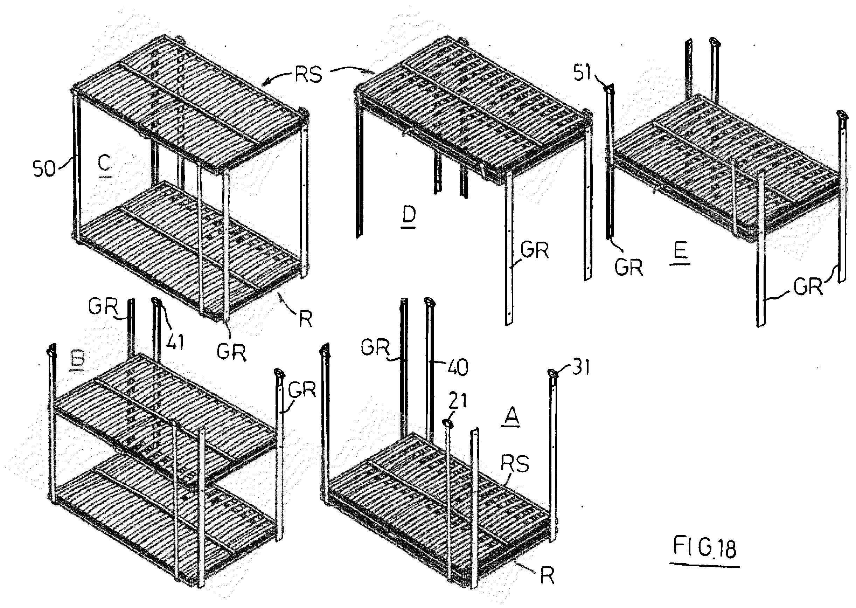

Figs 18A-18E, 19, 20, 21 and 22 show a further application of a device according to the present invention. More in particular, the device is used for handling two beds instead of one and it offers the possibility to install a bunk bed in the recreational vehicle although it is possible to continue benefiting from the aforesaid advantages.

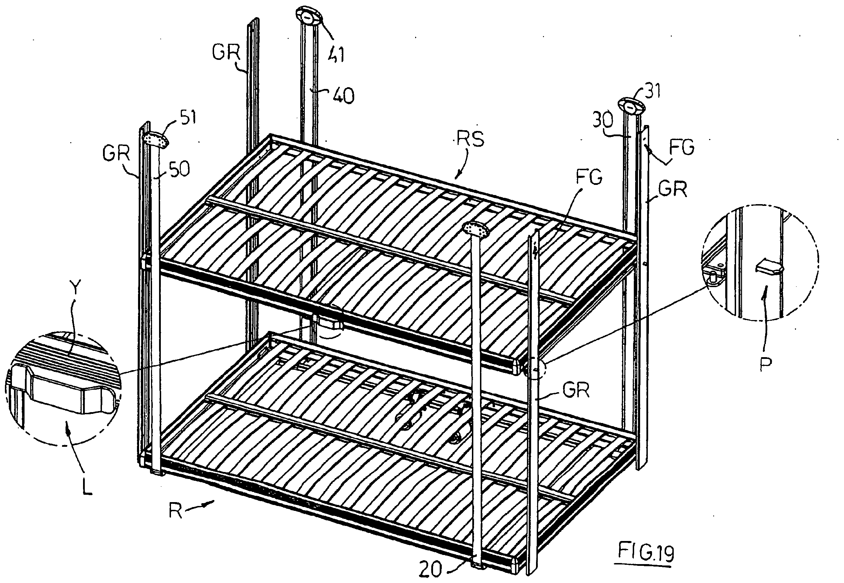

The net (R) of the lower bed is shown in Fig. 16. The net (RS) of the upper bed, when vertically moved, is guided by a plurality of vertical guides (GR). These guides, for example, are four and they are disposed in correspondence of the short sides of the upper bed net (RS). Moreover, the upper bed net (RS) is provided with a device for coupling it to said guides (GR), which is described in more detail in the following, and allows its blocking in various predetermined positions. The blocking positions of the upper bed net (RS) can be, for example, those shown in Figs 18B, 18C, 18D and 19. In Fig. 18B and Fig. 19, the upper bed net (RS) is blocked in its operating position, that is to say at a predetermined distance from the lower bed net (R) and from the vehicle ceiling. In Fig. 18C, the upper bed net (RS) is blocked in proximity to the vehicle ceiling, that is to say at the maximum distance from the lower bed net (R). In Fig. 18D, the upper bed net (RS) and the lower bed net (R) are both lifted and distanced from the ground to free up the whole space underneath. In Fig. 18E, the bed nets (R) and (RS) are in an intermediate position and the upper bed net (RS) is unlocked. In Fig. 18A the bed nets (R) and (RS) are both lowered.

The shifting from one configuration to another of the bunk bed, can be made as follows. Starting from the configuration of Fig. 18A, for example, the lower bed net (R) is lifted so as to push the upper bed net (RS) - which is unlocked - to the desired height (for example the height of Fig. 18B). In this position, the upper bed net (RS) is blocked to the guides (GR) which, therefore, support it. At this point, the lower bed net (R) is brought to the lower starting position so as to provide the bunk bed shown in Fig. 18B and in Fig. 19. If one wishes to configure the bed like in Fig. 18C, starting from the configuration shown in Fig. 18B, it is necessary to lift the lower bed net (R) and to bring it into contact with the upper bed net (RS). The latter is unlocked, as schematically shown in Fig. 18E, and pushed by the lower bed net (R) up to the maximum allowable height. At this point, the upper bed net (RS) is locked in correspondence of the guides (GR) and the lower bed net (R) is brought to its lowest position. To lower the upper bed net again (RS), it is necessary to bring the lower bed net (R) into contact with it, then the upper bed net (RS) is unlocked, as schematically shown in Fig. 18D, and the lower bed net (R) is lowered.

In practice, the lower bed net (R) constitutes a lifting and lowering means for the upper bed net (RS).

In other terms, the lower bed net (R) provides a support for the upper bed net (RS) during the changing of the structure configuration.

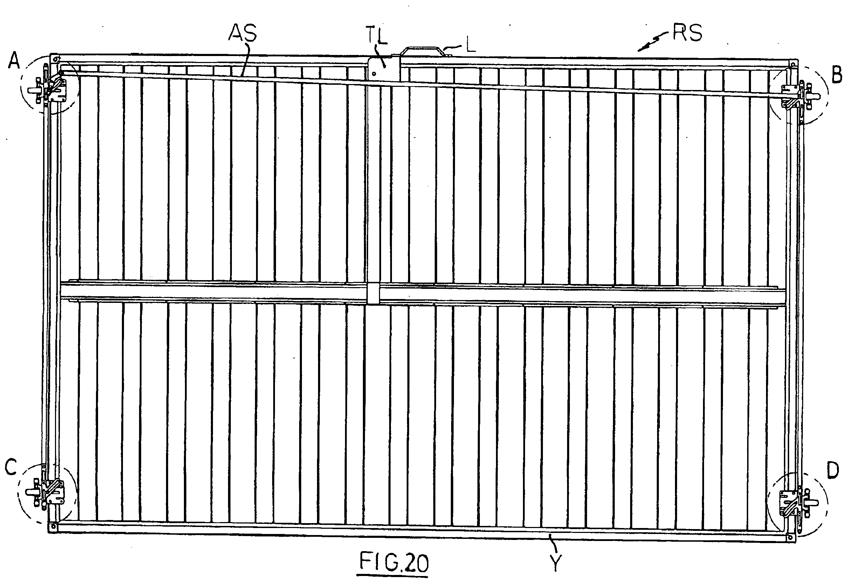

Fig. 20 shows a bottom plan view of the upper bed net (RS). This figure shows a possible embodiment of the locking mechanism of the bed net itself (RS) in correspondence of the guides (GR). Said locking mechanism comprises a lever (L) positioned on a front side, that is on an accessible side, of the bed net (RS) by means of which it is possible to retract and to extract four stakes (P) which, in the extracted position, engage corresponding passing holes (FG) provided in predetermined positions on the guides (GR) and which, in the retracted position, do no interfere with the guides (GR). The back side (TL) of the lever (L) features a rod (AS) which, on one side, (in Fig. 20 on the left - see detail "A") is coupled to an angled lever (S). The angled lever (S) is hinged on a fixed plate (PS) by means of a vertical axis hinge (CS). The angled lever (S) features a slot (X) on the side opposite to the side connecting it to the rod (S). Said plate (PS) is fixed to the frame (Y) of the bed net (RS). The corresponding stake (P) is perpendicular to a short side of the frame (Y) and it is inserted inside rectilinear guides (not shown in the drawings) provided by the upper face of the plate (PS), that is to say on the face of the latter turned upwards and it is provided with an orthogonal pin (Z) seated inside the slot (X) of the square (S). The pin (Z) is disposed so as to pass through a slot (H) presented by the diverging arm of a forkshaped element (KA). More particularly, said element (KA) features an upper branch which is parallel to the corresponding short side of the frame (Y), a diverging branch, that is to say a branch oriented towards the adjacent long side of the frame, and a lower branch which is parallel to the short side of the frame (Y). A slot (H) is provided on said diverging branch.

Therefore, when the rod (AS), operated by means of the lever (L), is moved leftwards, the angled lever (S) rotates in the counter-clockwise direction and forces the pin (Z), and consequently the stake (P), to move backwards. At the same time, the fork (KA) translates, as indicated by the arrow (AK) since the pin is inserted into the slot (H) which is oblique. And, when the rod (AS) operated by the lever (L), is moved rightwards, the angled lever (S) rotates in the clockwise direction and forces the pin (Z), and consequently the stake (P), to move forward. At the same time, the fork (KA) translates as indicated by the arrow (SK).

A link-rod (KK) is hooked on the lower branch end of the fork (KA) and connects it to a further fork (KC) (positioned below on the same side - see detail "C") and operating a corresponding stake (P) which can be extracted or retracted in the same manner, as said fork (KC) features a slot on its diverging branch inside which a pin (Z) of the stake is inserted, like in the case described above.

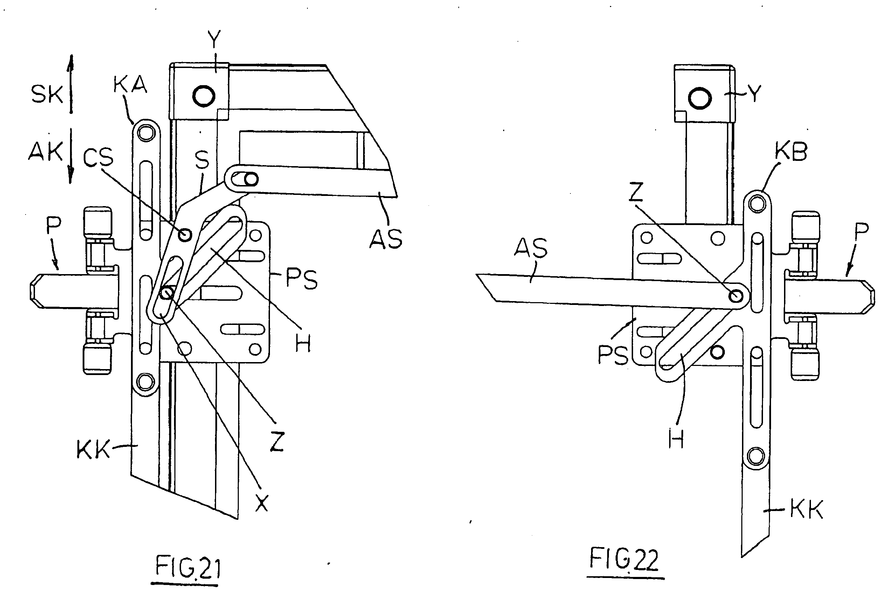

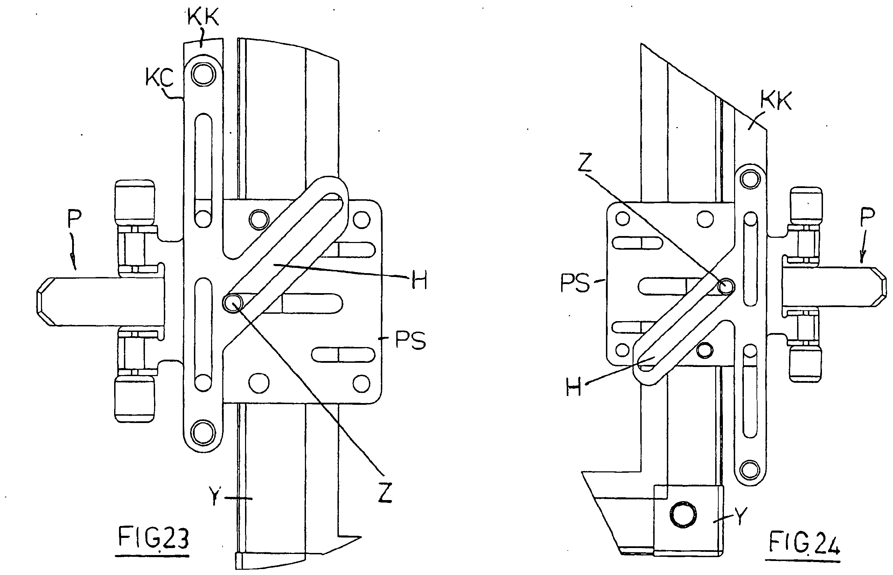

As shown in the figs. 22 and 24 concerning the enlarged details "B" and "D", the stakes "P" have the shape described above and are operated as previously explained, with reference to details "A" and "B", with the right-hand end of the rod (AS) connected on the pin (Z) of the corresponding stake (P) and with a second link-rod (KK) connecting the forks (KB) and (KD).

It is understood that the mechanism for locking the net (RS) to the guides (GR) can have any other suitable shape and can work in any other suitable manner.

In practice, the construction details may vary in any equivalent way as far as the shape, dimensions, elements disposition, nature of the used materials are concerned, without nevertheless departing from the scope of the claims thereby remaining within the limits of the protection granted to the present patent for industrial invention.

## Claims

1. Lifting device for bed structures comprising a shaft (1) operated by at least one speed reducer (10), wherein the said shaft operates two pairs of belts (20, 30, 40, 50), and an "L" shaped bracket (23, 33, 43, 53), on which the bed net (R) is positioned, is mounted on each of said belts (20, 30, 40, 50) so that, by operating the at least one speed reducer (10), that is to say by rotating the shaft (1) in the clockwise and counterclockwise direction about its longitudinal axis, the belts are wound or unwound with the consequent lifting or lowering of said brackets (23, 33, 43, 53), i.e. lifting or lowering of the bed net (R), and wherein at the ends of said shaft (1) there are provided two pairs of coaxial pulleys (2, 3, 4, 5) onto each of them it is wound a corresponding belt (20, 30, 40, 50) featuring one end anchored on the surface of the corresponding pulley and the other end joined to a corresponding fixed point or anchorage (21, 31, 41, 51) i.e. fixed to a point positioned at a predetermined height, corresponding vertical guides (22, 32, 42,52) being also fixed under said anchorages such that by rotating the shaft (1) in the clockwise and counter-clockwise direction about its longitudinal axis, the belts are wound around their corresponding pulleys or unwound from them so as to obtain the lifting and lowering of the brackets (23, 33, 43, 53) along the said guides (22, 32, 42, 52), and each belt (20, 30, 40, 50) slides inside a loop or eyelet offered by the respective "L"-shaped bracket (23, 33, 43, 53).

2. Lifting device according to claim 1 **characterized in that** an encoder (11) is associated with said at least one speed reducer (10) for sensing the revolutions of the speed reducer (100) output shaft, and the said encoder communicates with a programmable central unit (12) controlling the motor (101) of the speed on the basis of signals acquired by means of said encoder (11) during a device programming or setting phase for defining the maximum lifting position of the bed net (R) .

3. Device according to claim 2 **characterized in that** it comprises a key-board (13) connected to said programmable central unit (12) and **in that**, through said keyboard, the user, during said setting or programming phase, controls the lifting of the bed net (R) until an electric end switch is reached, where the system is reset, then he/she controls the descent of the bed net (R) to a desired point and stores said point which corresponds to a given number of revolutions detected by the encoder (11).

4. Device according to claim 1, **characterized in that** said at least one speed reducer (10) is provided with a single exit shaft.

5. Device according to claim 1 **characterized in that** said at least speed reducer (10) is provided with two exit shafts.

## Patentansprüche

1. Hubvorrichtung für Bettstrukturen, die eine Welle (1) umfasst, die durch wenigstens einen Drehzahlminderer (10) betätigt wird, wobei die Welle zwei Paare von Gurten (20, 30, 40, 50) betätigt, und wobei ein "L"-förmiger Halter (23, 33, 43, 53), auf dem ein Matratzenträger (R) positioniert ist, an jedem der Gurte (20, 30, 40, 50) so montiert ist, dass durch Betätigung des wenigstens einen Drehzahlminderers (10), d.h. durch eine Rotation der Welle (1) im bzw. entgegen dem Uhrzeigersinn um ihre Längsachse, die Gurte auf- oder abgewickelt werden, was zur Folge hat, dass die Halter (23, 33, 43, 53) angehoben oder abgesenkt werden, sodass der Matratzenträger (R) angehoben oder abgesenkt wird, und wobei an den Enden der Welle (1) zwei koaxiale Gurtrollen (2, 3, 4, 5) vorgesehen sind, auf jede von denen ein entsprechender Gurt (20, 30, 40, 50) aufgewickelt ist, wobei ein Ende an der Oberfläche der entsprechenden Gurtrolle befestigt und das andere Ende mit einem entsprechenden festen Punkt oder einer Verankerung (21, 31, 41, 51) verbunden, d.h. an einem Punkt befestigt ist, der in einer vorgegebenen Höhe positioniert ist, wobei entsprechende vertikale Führungen (22, 32, 42, 52) ebenfalls unter diesen Verankerungen befestigt sind, sodass eine Drehung der Welle (1) im oder entgegen dem Uhrzeigersinn um ihre Längsachse die Gurte auf ihren entsprechenden Gurtrollen auf-oder von ihnen abgewickelt werden, um so das Anheben und Absenken der Halter (23, 33, 43, 53) längs der Führungen (22, 32, 42, 50) zu erreichen, wobei jeder Gurt (20, 30, 40, 50) innerhalb einer Öse bzw. eines Auges begleitet, die bzw. das an dem entsprechenden " L"-förmigen Halter (23, 33, 43, 53) vorgesehen ist.

2. Hubvorrichtung nach Anspruch 1, **dadurch gekennzeichnet, dass** dem wenigstens einen Drehzahlminderer (10) ein Geber (11) zugeordnet ist, um die Umdrehungen der Ausgangswelle des Drehzahlminderers (10) zu erfassen, wobei dieser Geber mit einer programmierbaren Zentraleinheit (12) in Verbindung steht, welche die Geschwindigkeit des Motors (101) auf der Basis von Signalen steuert, die mithilfe des Gebers (11) während einer Einstell- oder Programmierphase der Vorrichtung gewonnen wurden, um die maximale Hubstellung des Matratzenträgers (R) zu definieren.

3. Vorrichtung nach Anspruch 2, **dadurch gekennzeichnet, dass** sie eine Tastatur (13) umfasst, die mit der programmierbaren Zentraleinheit (12) verbunden ist, und dass mithilfe dieser Tastatur der Verwender während der Einstell- oder Programmierphase das Anheben des Matratzenträgers (R) steuert, bis ein elektrischer Endschalter erreicht ist, wodurch das System zurückgesetzt wird, worauf der Verwender das Absenken des Matratzenträgers (R) bis zu einem gewünschten Punkt steuert und diesen Punkt speichert, der einer gegebenen Anzahl von durch den Geber (11) detektierten Umdrehungen entspricht.

4. Vorrichtung nach Anspruch 1, **dadurch gekennzeichnet, dass** der wenigstens eine Drehzahlminderer (10) eine einzige Ausgangswelle aufweist.

5. Vorrichtung nach Anspruch 1, **dadurch gekennzeichnet, dass** der wenigstens eine Drehzahlminderer (10) zwei Ausgangswellen aufweist.

## Revendications

1. Dispositif de levage pour des structures de lits, comprenant un arbre (1) entraîné par au moins un motoréducteur (10), dans lequel ledit arbre entraîne deux paires de courroies (20, 30, 40, 50) et sur chacune desdites courroies (20, 30, 40, 50) est monté un support en forme de "L" (23,33, 43, 53), sur lequel est posé le sommier (R) du lit, de sorte que, par l'actionnement dudit au moins un motoréducteur (10), c'est à dire en faisant tourner l'arbre (1) dans le sens horaire ou antihoraire autour de son axe longitudinal, il a l'enroulement des courroies sur les poulies respectives ou le déroulement et, par conséquent, le levage ou l'abaissement du sommier (R), et dans lequel aux extrémités de dudit arbre (1) sont prévues deux paires correspondantes de poulies coaxiales (2,3,4,5) sur chacune desquelles est enroulé une courroie correspondante (20, 30, 40, 50)qui possède une extrémité ancrée sur la surface de la poulie associée et une extrémité fixée à un point fixe correspondant ou ancrage (21,31,41, 51), c'est à dire à un point situé à une hauteur prédéterminée, des correspondants guides verticaux (22, 32, 42, 52) étant également fixé sous lesdits ancrages, de sorte que par la rotation de l'arbre (1) dans le sens horaire et dans le sens antihoraire autour de son axe longitudinal, les courroies sont enroulées sur les poulies correspondantes ou sont déroulées de manière à obtenir le levage et l'abaissement des supports (23, 33, 43, 53) le long desdits guides (22, 32, 42, 52) et chacune courroie (20, 30, 40, 50) glisse dans une boucle ou en oeillet offert par le correspondant support en forme de "L".

2. Dispositif de levage selon la revendication 1, **caractérisé en ce que** un encodeur (11) est associé audit au moins un motoréducteur (10) pour détecter les révolutions de l'arbre de sortie (100)du motoréducteur, et ledit encodeur communique avec une unité centrale programmable (12) commandant la vitesse du moteur (101) sur la base de signaux acquis au moyen dudit encodeur (11) pendant une phase de programmation ou de réglage du dispositif pour définir la position de levage maximale du sommier du lit (R).

3. Dispositif selon la revendication 2, **caractérisé en ce qu'**il comporte un clavier (13) relié à ladite unité centrale programmable (12) et **en ce que**, par l'intermédiaire dudit clavier, l'utilisateur, lors de ladite mise en phase ou programmation, commande le levage du sommier du lit (R) jusqu'à une fin de course électrique est atteinte, lorsque le système est remis à zéro, alors il / elle commande la descente du sommier du lit(R) à un point souhaité et stocke ledit point qui correspond à un nombre donné de révolutions détectés par le encodeur (11) .

4. Dispositif selon la revendication 1, **caractérisé en ce que** ledit au moins un motoréducteur (10) est pourvu d'un arbre de sortie unique.

5. Dispositif selon la revendication 1, **caractérisé en ce que** ledit au moins un motoréducteur (10) est pourvu de deux arbres de sortie.
